Europäisches Patentamt

European Patent Office

Office européen des brevets

(11) Publication number: **0 455 359 A2**

# EUROPEAN PATENT APPLICATION

(21) Application number: **91303147.2**

(22) Date of filing: **10.04.91**

(51) Int. Cl.⁵: **G11B 5/31**

(30) Priority: **30.04.90 US 516158**

(43) Date of publication of application:
**06.11.91 Bulletin 91/45**

(84) Designated Contracting States:
**DE FR GB IT NL**

(71) Applicant: **SEAGATE TECHNOLOGY INTERNATIONAL**
**c/o Maples & Calder P.O. Box 309**
**Georgetown Grand Cayman Island(KY)**

(72) Inventor: **Mowry, Gregory Stephen**
**13905 James Avenue South**
**Burnsville, Minnesota 55337(US)**
Inventor: **Tolman, Charles Henry**
**1105 Bliss Lane Circle**
**Bloomington, Minnesota 55431(US)**

(74) Representative: **Caro, William Egerton et al**
**J. MILLER & CO. Lincoln House 296-302 High Holborn**
**London WC1V 7JH(GB)**

(54) **Thin film magnetic head and method of manufacture thereof.**

(57) A thin film magnetic recording head (10) comprises a magnetic yoke including a top paddle (12) and a bottom paddle for defining a high permeability flux path. A flattened, generally elliptical conductive coil (14) extends through the magnetic yoke with a plurality of substantially parallel conductor portions within the yoke and generally normal to the hard axis of magnetisation, which is parallel to the axis of symmetry of the yoke. The yoke has an easy axis of magnetisation normal to the hard axis. The paddle (12) has a pole tip (16) and the bottom paddle another similar pole tip. The parts of the head are deposited upon a substrate and separated by a saw cut in an alley (18) spaced from the parallel tip faces by sufficient space to relieve the yoke from stress during slicing.

Fig. 1

EP 0 455 359 A2

The present invention relates to thin film magnetic read/write heads and methods of manufacture thereof.

Thin film magnetic read/write heads are used for magnetically reading and writing information on a magnetic storage medium, such as a magnetic disk, which is in motion relative to the head. A thin film magnetic head comprises a pair of "poles" or "paddles" which form the magnetic core of the head. Such a pair forms a yoke, and hereinafter the term "paddle" will be used to refer to such a pole or paddle. Electrical conductors pass between the two paddles and are used for both reading and writing information on the magnetic storage medium. During a write operation, electrical current is caused to flow through the conductors which generates a magnetic field in the paddles. The structure includes a gap region which comprises a small space between the two tips of the two paddles. The write current in the coils causes magnetic flux to span the gap region. This magnetic flux is then used to impress a magnetic field upon a storage medium during the write operation which results in a magnetic transition being recorded. During the read operation the the magnetic head and the storage medium also move relative to each other causing a changing magnetic field to be induced in the coil and the coils link the magnetic circuit. Electric signals in the conductors may be sensed with electric circuitry which allows recovery of information stored on the magnetic medium.

The performance of a thin film magnetic head is degraded by a phenomenon known as the "glitch" effect or "remote read" effect. The remote read effect is characterised by a voltage noise spike generated by the head in the coils after a random delay following completion of a write process. The voltage spike is of sufficient magnitude to be decoded as valid data which causes a system error. In prior art thin film magnetic heads, the glitch typically has a probability of occurring about once in every $10^3$ to $10^5$ write operations.

The occurrence of a glitch causes incorrect data to be read back from the magnetic medium and is highly undesirable. The prior art does not explain the interrelation of both design and material properties used in a thin film head on the remote read effect. The invention seeks to provide an improved thin film head in which the glitch effect or remote read effect is eliminated, reduced or rendered statistically less likely, and thus to achieve a significant improvement to the art.

The remote read effect is characterised by a voltage noise spike induced in the coil which was generated by the head after a random delay following completion of a write process to a magnetic disk. The effect probably results from the relaxation, or sudden change, of the magnetic domain structure of the paddle. Such a voltage noise spike can be read (incorrectly) as data during a write verification step. When this occurs, correct write data can be interpreted by the system as being in error.

The invention provides for configuration of the coil and the paddle of an inductive thin film head so that the paddle structure is subjected primarily to hard axis ("HA") magnetic write fields. In particular, the head/coil configuration is such that the magnetic field in the easy axis direction does not exceed the local coercivity, $H_C$, of the paddles. Preferably, the paddle has a large length-to-width ratio, where elongated shapes support domain stability. The ferro-magnetic paddle itself may be formed using a negative magnetostriction material (typically permalloy) to reduce magnetic distortion of the pole domain structure. The overall pole tip length prior to machining may be small to minimise inter-action observed between slider machining and pole domain structure variation.

According to the invention, a thin film magnetic head comprises a magnetic yoke including top and bottom paddles for defining a high permeability magnetic flux path, and a flattened, generally elliptical coil extending through the magnetic yoke including a flattened portion having a plurality of substantially parallel conductors extending though the magnetic yoke and a substantially elliptical portion extending beyond the magnetic yoke for maximising exposure of the magnetic yoke to hard axis magnetic drive fields and minimising exposure of the magnetic yoke to easy axis magnetic drive fields.

Preferably, the magnetic yoke is deposited upon a non-magnetic substrate and has an axis of symmetry, the top and bottom paddles having negative magnetostriction and spaced apart pole tips defining a magnetic flux gap in the magnetic yoke for recording and reading data in the vicinity of the flux gap, the pole tips being normal to the axis of symmetry, the top and bottom paddles including their respective pole tips having a hard axis of magnetisation generally parallel to the axis of symmetry and an easy axis of magnetisation normal to the hard axis of magnetisation in a plane of the paddle.

The windings of the coil extending through the magnetic yoke may be generally normal to the hard axis and parallel to the easy axis of magnetisation of the paddle.

It is advantageous to include during fabrication a saw alley in the substrate, the saw alley extending generally normal to the easy axis and spaced apart from the pole tip.

Each paddle may comprise a pole tip region having a pole tip width; a back region having a back region width and a side which defines a back region length, the back region width being greater than the pole tip width; and a middle region extending between the pole tip region and the back region and having a front edge with a front edge width which contacts the pole tip region and a back edge with a back edge width which contacts the back region, the front edge width being less than the back edge width, the middle region including a side extending between the back region and the pole tip region, wherein the back region side and the middle region back edge form a first angle and the middle region side and the middle region front edge form a second angle.

The invention extends to a method of manufacturing a thin film magnetic recording head, comprising depositing upon a substrate a lower paddle with a negative magnetostriction and having an axis of symmetry, the lower paddle including a pole tip region; depositing upon the lower paddle an insulating layer, the insulating layer carrying a conductive coil there-through; and depositing upon the insulating layer and the lower paddle an upper paddle with a negative magnetostriction and having an axis of symmetry, the upper paddle including a pole tip region, the upper paddle and lower paddle forming a magnetic yoke defining a high permeability magentic flux path, upper and lower pole tip regions defining a magnetic flux gap in the magnetic yoke for recording and reading data in the vicinity of the magnetic flux gap, the pole tip faces being normal to the axis of symmetry, the magnetic yoke having a hard axis of magnetisation generally parallel to the axes of symmetry and an easy axis of magnetisation normal to the hard axis of magnetisation; the conductive coil and the magnetic yoke having a relative configuration for maximising exposure of the magnetic yoke to hard axis magnetic drive fields and minimising exposure of the magnetic yoke to easy axis magnetic drive fields, whereby drive fields in the easy axis direction do not exceed local coercivity of the magnetic yoke.

Such a method may include slicing the non-magnetic substrate along a saw alley which extends parallel to the pole tip face and spaced apart from the pole tip region, whereby the magnetic yoke is insulated from stress during slicing.

The invention can be defined as a method of reducing the glitch rate in a thin film magnetic head having a magnetic yoke with a hard axis direction and an easy axis direction, comprising applying a magnetic drive field from a magnetic storage disk to the magnetic yoke so that exposure of the magnetic yoke to magnetic drive fields in the easy axis direction is minimised and exposure to magnetic drive fields in the hard axis direction is maximised.

Alternatively, the invention may be defined as a method of reducing the glitch rate in a thin film magnetic head having magnetic yoke with a hard axis direction and an easy axis direction comprising applying a magnetic drive field from a magnetic storage disk to the magnetic yoke so that exposure to magnetic drive fields in the easy axis direction does not exceed local coercivity of the magnetic yoke.

The invention will be described further, by way of example, with reference to the accompanying drawings, in which:-

Figure 1 is a top sectional view of a thin film magnetic read/write head according to the present invention;

Figure 2 is a sectional view of the head of Figure 1 on the line 2 - 2;

Figure 3 shows the magnetic domain pattern for the paddle of the head of Figure 1;

Figure 4 is a top view of a thin film magnetic head according to the present invention; and

Figure 5 is a perspective view of part of a wafer carrying many thin film magnetic read/write heads made according to the present invention.

As the track width of inductive thin film heads decreases, certain noise phenomena become more and more frequent. One such phenomenom, called a glitch, is typified by the occurrence during a read operation of a noise spike in the output voltage of the inductive thin film head after a write process has been completed. The noise spike, which occurs after a short, random, time lag following writing, results in a read noise voltage of sufficient amplitude to cause a system error in the information decoding process of a disk drive. Because it is desirable to have a system bit error rate of less than $1 \times 10^{-10}$, and since the glitch phenomenom is observed to occur in prior art designs on the order of $1 \times 10^{-3}$ to $1 \times 10^{-5}$ times for every write, the glitch effect limits system performance.

The origin of the glitch is related to the output voltage of the thin film head ($V_{out}$) as follows:-

$$V_{out} = N.d\phi/dt \quad \text{(Equation 1)}$$

where:

$\phi =$      $BA = HA + 4\pi MA = A(H + 4\pi M)$

$\phi =$      Magnetic flux

$B =$      Total magnetic induction

$H =$      Magnetic field

3

$4 \pi M =$     Magnetisation intensity in a magnetic material

$A =$     Area

$K =$     Constant of proportionality

$N =$     Number of turns in the coil

then:

$$V_{out} = NK (A.dH/dt + 4 \pi A.dM/dt) \qquad (\text{Equation 2})$$
$$= NKA (dH/dt + 4 \pi dM/dt)$$

When an inductive thin film head is reading information, $H = 0$ and $dH/dt = 0$. If the domain structure of the inductive thin film head changes after a write process has terminated, $dM/dt$ has a relatively large value, and a glitch voltage proportional to $dM/dt$ results due to the relationship of Equation 2. Hence the source of glitch can be identified with sudden, thermo-dynamically irreversible changes in the domain structure of an inductive thin film head after writing. The glitch is probably triggered either by stress relaxation due to cooling after writing, or by the weak magnetic read fields that the inductive thin film head senses from recorded data.

Three experimental observations have lead to the present invention. First, in the course of studying magneto-resistive head (MRH) domain structure, it has been determined that any easy axis (EA) drive field tends to leave the domain structure of a paddle in a highly unstable and unpredictable state which can suddenly change. Furthermore, it has also been found in these studies that the domain structure is significantly more reproducible and stable for hard axis (HA) drive fields.

Second, Theoretical calculations and paddle structure variation experiments indicate that a narrower paddle structure further stabilises the inductive thin film head permalloy domain structure for the negative magnetostriction plating compositions currently employed in inductive thin film head manufacturing.

Third, these studies have also shown that slider machining processes can significantly alter the domain structure if attention is not given to the region where machining occurs relative to the magnetic paddle structure. Specifically, the slicing of the substrate can damage the paddle structure if the slicing operation comes near to or cuts through the paddle tip.

The nature of this invention is to utilise these experimental observations in a new approach which minimises the glitch rate. More specifically, by attempting to minimise the total magnetic energy in the domains of a thin film head, thereby establishing a domain structure with improved stability, the present invention reduces the remote read effect. The curve of total domain wall energy versus number of magnetic domains for a given thin film head paddle design and magnetic material properties has a "U" shape. The most stable magnetic domain state being found at the minimum of this curve. The present invention attempts to place the thin film head paddle design at the base of this "U" curve in order to optimise domain stability by minimising domain energy. The aspects of this invention are:

(1) A new coil design which subjects the magnetic pole structure to only hard axis drive fields.

(2) A narrow paddle design which, when used in conjunction with a negative magnetostriction bath, improves the stability of the inherent domain structure.

(3) A reduced paddle tip length to minimise the interaction between paddle tip machining and paddle domain structure variations.

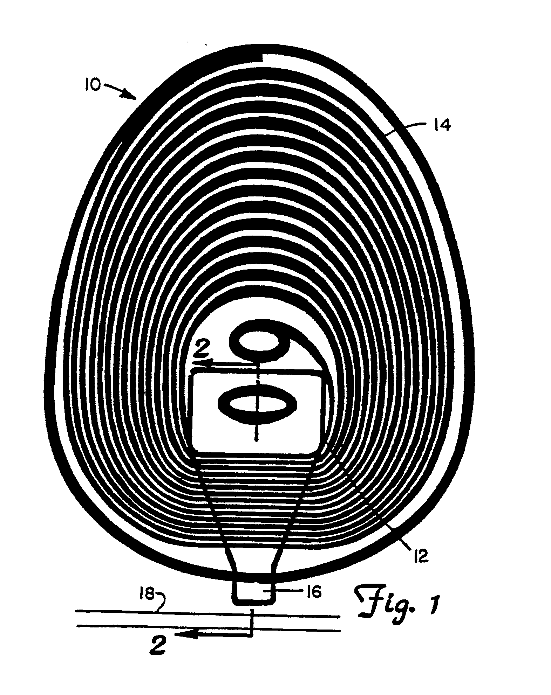

An inductive thin film magnetic head 10 (Figure 1) in accordance with the present invention includes a pair of paddles of which only the top paddle 12 is visible, conductors 14 formed in a coil and upper paddle tip 16.

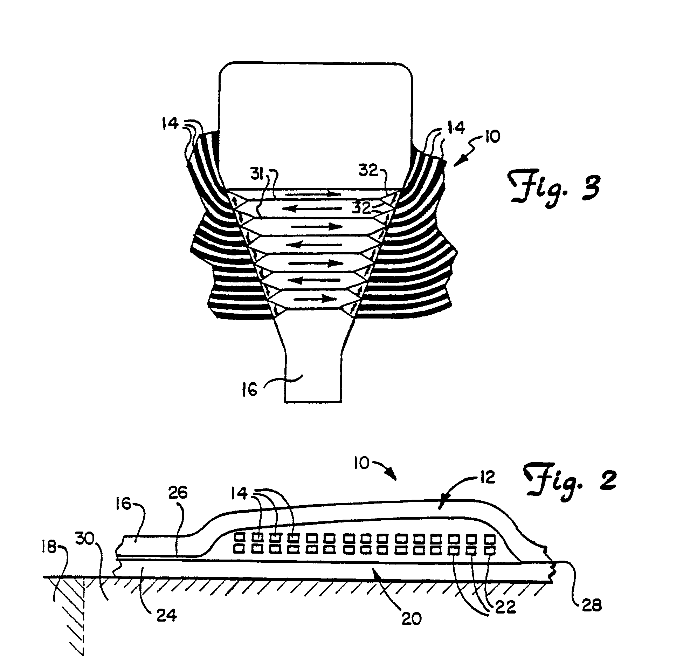

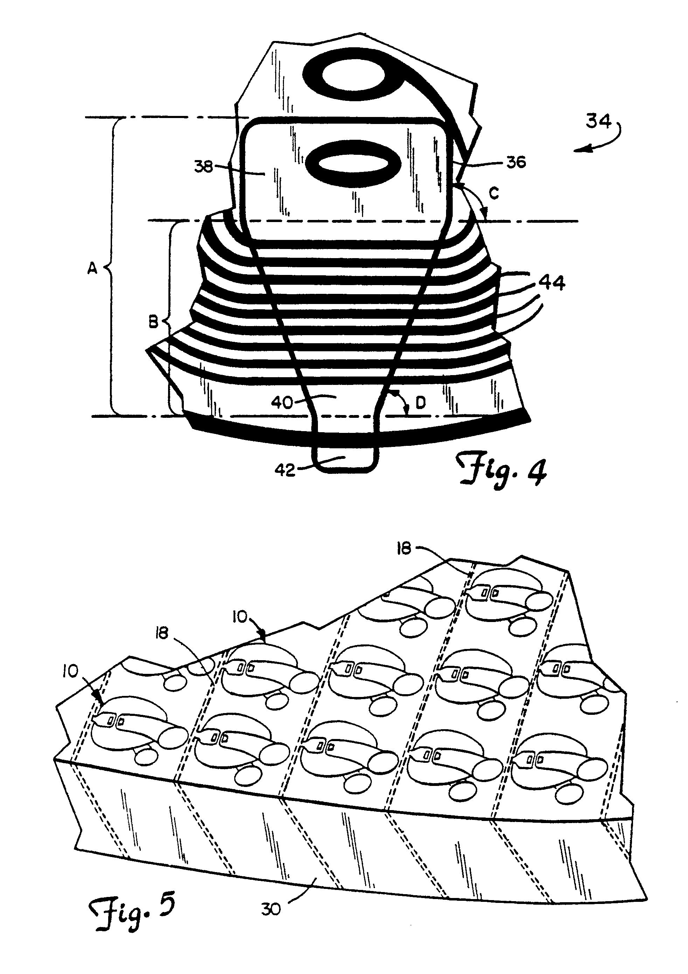

Lower paddle 20 (Figure 2) of thin film head 10 and upper paddle 12 sandwich conductors 14 and conductors 22. Lower paddle 20 includes lower pole tip 24. Upper pole tip 16 and lower pole tip 24 are separated by an insulating gap layer 26 used for reading and writing information on a magnetic storage medium. Upper paddle 12 and lower paddle 20 are in contact by a via connection at a back gap 28. (This contact is not necessarily required). During manufacture, many thin film heads 10 (Figure 5) are deposited on a substrate 30. Each row of heads 10 is separated from the next row by slicing the substrate along a saw alley or kerf 18, leaving a bar of the substrate carrying a linear row of heads. The saw alley or kerf 18 (Figure 1) is perpendicular to the plane of the desposited head 10 and parallel to the end face of the tip 16. Thin film head 10 is deposited upon substrate 30 adjacent to the intended position of the saw alley or kerf 18. The saw alley or kerf 18 where the substrate 30 is sliced, is explained below in more detail.

The method of manufacturing a thin film magnetic recording head according to one embodiment of the invention, comprises depositing a lower paddle 20 upon a non-magnetic substrate 30, the lower paddle 20 having a negative magnetostriction and an axis of symmetry and including a pole tip 24. An insulating layer is then deposited upon the lower paddle 20 with conductors 14 and 22 passing there-through to form a conductive coil. An upper paddle 12 is deposited on the insulating layer and over the lower paddle, the upper paddle 12 having a negative magnetostriction and an axis of symmetry and including a pole tip 16. The upper and lower paddles form a magnetic yoke defining a high permeability magnetic flux path. The upper and lower pole tips define a magnetic flux gap in the yoke for recording and reading data. The pole tip faces are normal to the axes of symmetry. The magnetic yoke has a hard axis of magnetisation parallel to the axes of symmetry and an easy axis of magnetisation normal to the hard axis of magnetisation. Thus the conductive coil and the magnetic yoke are so configured as to maximise exposure of the yoke to hard axis magnetic drive fields and to minimise exposure of the yoke to easy axis magnetic drive fields, so that drive fields in the easy axis direction do not exceed local coercivity of the magnetic yoke.

The magnetic domain structure of the paddles of the inductive thin film head 10 in accordance with the present invention, has horizontal (or 180°) walls 31 (Figure 3) and closure (90°) walls 32. The arrows within walls 31 and 32 indicate the direction of the magnetisation of the material in a relaxed state, when no external magnetic fields are applied. The arrows could be pointing in the opposite directions.

The present invention in its fullest form, as described, uses a three point approach to increase the domain stability and re-producibility in thin film heads. First, the drive field used during the write operation subjects the magnetic head to drive fields pointed only along the hard axis direction. This is achieved by forming coil 14 (Figure 1) perpendicular to the magnetic hard axis of paddle 12, which points from back gap 28 (Figure 2) towards pole tip 16 along an axis of symmetry through the paddle 12. Coil 14 is formed in a flattened egg or elliptical shape. The windings of coil 14 curve around paddles 12 and 20 but the windings are straight and parallel where they pass between paddles 12 and 20. The straight portion of coil 14 provides a magnetic drive field in the direction of the hard axis of paddles 12 and 20. In comparison, a prior art thin film head includes a coil which is wrapped at a substantially curved angle through the core of the prior art thin film head. By subjecting thin film head 10 of the present invention exclusively to hard axis drive fields, the magnetic domain structures of paddles 12 and 20 are more stable and more re-producible than in prior art thin film paddles, and therefore less susceptible to the glitch or remote read effect. In particular, the head/coil configuration of the present invention limits the drive field applied in the easy axis direction so that it does not exceed the local coercivity ($H_C$) of the magnetic material.

Another measure used in an embodiment of the present invention which yields a significantly reduced glitch rate, is to shape and dimension the paddles. Thin film head 34 (Figure 4) comprises paddle 36 and coil 44. Paddle 36 includes back region 38, middle region 40 and pole tip region 42. Dimension A is the length of the middle region 40 plus the length of the back region 38 in the direction of the axis of symmetry. Dimension B is the length of the middle region 40. Angle C is formed between a side of the back region 38 and a line perpendicular to the axis of symmetry of the paddle 36. Angle D is formed between a side of the middle region 40 and a line perpendicular to the axis of symmetry of the paddle 36. Through experimental observation on the thin film heads manufactured using standard plated permalloy, suitable values for these dimensions and angles to reduce the glitch rate are as follows:-

| Parameter | Value |
|-----------|-------|
| A | 135 to 165 µm |
| B | Less than 35 µm |
| C | 85° to 95° . |
| D | 45° to 90° |

These values were determined where paddle 36 had an anisotropy ($H_K$) between about 3 Oersteds and about 5 Oersteds, a coercivity ($H_C$) of about 0.8 Oersteds, a saturation magnetisation ($M_S$) of about 10,000 Gauss, a thickness ($\delta$) between about 1 micron and about 4 microns and a negative magnetostriction. Paddle width at the junction between the middle region and the back region is calculated using the formula:

width = pole tip width + 2 (B tan D).

If C is not 90°, then the paddle width at the back region remote from the middle region differs from that width by 2 (A - B) tan C. This is usually relatively small and can be dis-regarded. As the head of the present invention is for use at high recording densities, the pole tip width is relatively small and can be substantially ignored when calculating paddle back region width.

Thus the thin film head 34 (Figure 4) made in accordance with the present invention, uses a reduced paddle width-to-length ratio which is less than that of a prior art paddle and the paddle 36 is narrower than a prior art paddle. This eliminates the paddle "ears" characteristic of prior art thin film heads. This narrow configuration with respect to the length of paddle 36 further stabilises the inductive thin film head domain structure when negative magnetostriction material is used to form the paddle 36. Plating a ferro-magnetic alloy with negative magnetostriction is the method currently used in fabricating inductive thin film magnetic heads to produce the desired characteristic magnetic domain structure.

During fabrication, many thin film magnetic heads 10 are deposited across the surface of a substrate 30 (Figure 5). After the heads 10 are deposited, the substrate 30 is sliced along "saw alleys" 18 into a plurality of bars, each carrying thin film heads 10 arranged linearly along the bar. The saw alley or kerf is necessary because the process of slicing the substrate removes a swathe of material which creates an "alley".

In order to reduce stress during the sawing process, pole tips 16 (Figure 1), 24 (Figure 2) and 42 (Figure 4) have a shorter length than a pole tip used in a prior art thin film head. The purpose of the reduced pole tip length is to provide an increased distance between the pole tips and the saw alley 18 as indicated in Figure 1. In a prior art thin film head, the pole tips are often very long relative to the head. The dimension was not considered important because the tips were simply cut when the wafer was sliced. Large separation between the end of the pole tip and the saw alley is now preferred and according to the present invention, the pole tip length should be less than about 10 microns. The spacing between the pole tips and the saw alley provides a buffer region which limits induced thin film head stress during the sawing process. Final pole tip dimensions are reached using a standard lapping process in which the pole tips are applied to a mild abrasive such as a diamond slurry. This lapping process is far gentler than the sawing process. By limiting the stress to the thin film head, the domain structure of the thin film head of the present invention remains substantially intact in the final product, further increasing magnetic domain stability and re-producibility over prior art thin film heads.

The inductive thin film magnetic head of the present invention offers improved stability and re-producibility in the magnetic domain pattern thereby limiting the glitch effect or remote read effect. The present invention in its fullest form uses a three point approach to provide an improved overall thin film head package. First, the coils are formed to produce magnetic drive fields in only the magnetic hard axis direction. Second, a narrower pole design is used which eliminates the "ears" of prior art thin film head paddles and further improves domain structure stability and re-producibility. Finally, the head is subjected to less stress during the fabrication process by limiting the inter-action of the sawing process with the structure of the thin film head.

Although the present invention has been described with reference to preferred embodiments, workers skilled in the art will recognise that changes may be made in form and details without departing from the scope of the invention. For example, some designs may only use a top paddle of ferrite made in accordance with the present invention.

## Claims

1. A thin film magnetic head comprising a magnetic yoke including top and bottom paddles (12, 20) for defining a high permeability magnetic flux path, and a flattened, generally elliptical coil (14) extending through the magnetic yoke including a flattened portion having a plurality of substantially parallel conductors extending though the magnetic yoke and a substantially elliptical portion extending beyond the magnetic yoke for maximising exposure of the magnetic yoke to hard axis magnetic drive fields and minimising exposure of the magnetic yoke to easy axis magnetic drive fields.

2. A head as claimed in claim 1, wherein the magnetic yoke is deposited upon a non-magnetic substrate and has an axis of symmetry, the top and bottom paddles (12, 20) having negative magnetostriction and spaced apart pole tips (16, 24) defining a magnetic flux gap in the magnetic yoke for recording and reading data in the vicinity of the flux gap, the pole tips being normal to the axis of symmetry, the top and bottom paddles including their respective pole tips having a hard axis of magnetisation generally parallel to the axis of symmetry and an easy axis of magnetisation normal to the hard axis of magnetisation in a plane of the paddle.

3. A head as claimed in claim 1 or 2, wherein the windings of the coil extending through the magnetic yoke are generally normal to the hard axis and parallel to the easy axis of magnetisation of the paddle.

4. A head as claimed in claim 1, 2 or 3, wherein each paddle comprises a pole tip region (42) having a pole tip width; a back region (38) having a back region width and a side which defines a back region length, the back region width being greater than the pole tip width; and a middle region (40) extending between the pole tip region and the back region and having a front edge with a front edge width which contacts the pole tip region and a back edge with a back edge width which contacts the back region, the front edge width being less than the back edge width, the middle region including a side extending between the back region and the pole tip region, wherein the back region side and the middle region back edge form a first angle (C) and the middle region side and the middle region front edge form a second angle (D).

5. A head as claimed in claim 4, wherein the first angle (C) is between about 85° and about 95°.

6. A head as claimed in claim 4 or 5, wherein the second angle (D) is between about 45° and about 90°.

7. A head as claimed in claim 4, 5 or 6, wherein the middle region (40) has a middle region length (B) between the back region (38) and the pole tip region (42) and the middle region length is less than about 35 microns.

8. A head as claimed in claim 4, 5, 6 or 7, wherein the back region length (A - B) is between about 100 microns and about 130 microns.

9. A method of manufacturing a thin film magnetic recording head, comprising depositing upon a substrate a lower paddle (20) with a negative magnetostriction and having an axis of symmetry, the lower paddle including a pole tip region (16); depositing upon the lower paddle an insulating layer, the insulating layer carrying a conductive coil there-through; and depositing upon the insulating layer and the lower paddle an upper paddle with a negative magnetostriction and having an axis of symmetry, the upper paddle including a pole tip region, the upper paddle and lower paddle forming a magnetic yoke defining a high permeability magentic flux path, upper and lower pole tip regions defining a magnetic flux gap in the magnetic yoke for recording and reading data in the vicinity of the magnetic flux gap, the pole tip faces being normal to the axis of symmetry, the magnetic yoke having a hard axis of magnetisation generally parallel to the axes of symmetry and an easy axis of magnetisation normal to the hard axis of magnetisation; the conductive coil and the magnetic yoke having a relative configuration for maximising exposure of the magnetic yoke to hard axis magnetic drive fields and minimising exposure of the magnetic yoke to easy axis magnetic drive fields, whereby drive fields in the easy axis direction do not exceed local coercivity of the magnetic yoke.

10. A method as claimed in claim 9, including slicing the non-magnetic substrate (30) along a saw alley (18) which extends parallel to the pole tip face and spaced apart from the pole tip region, whereby the magnetic yoke is insulated from stress during slicing.

*Fig. 1*

*Fig. 3*

*Fig. 2*

Fig. 4

Fig. 5